# EUROPÄISCHE PATENTSCHRIFT

(11) **EP 3 364 075 B1**
(45) Veröffentlichungstag und Bekanntmachung des Hinweises auf die Patenterteilung: **07.07.2021**
(21) Anmeldenummer: 18155483.3
(22) Anmeldetag: 07.02.2018
(51) Int. Cl.: B29C 65/06, B29C 65/08, B29C 65/14, B29C 65/20, F16H 57/02, F16H 57/023, F16H 57/031, F16H 57/032, B29C 65/78, B29L 15/00, F16H 57/08

(54) **GETRIEBEGEHÄUSE, INSBESONDERE FÜR EIN UMLAUFRÄDERGETRIEBE UND HERSTELLUNGSVERFAHREN**
TRANSMISSION HOUSING, IN PARTICULAR FOR AN EPICYCLIC GEAR AND METHOD OF MANUFACTURING
BOÎTIER D'ENGRENAGE, EN PARTICULIER POUR ENGRENAGES PLANÉTAIRES ET PROCÉDÉ DE FABRICATION

(30) Priorität: 21.02.2017 DE 102017103502
(43) Veröffentlichungstag der Anmeldung: 22.08.2018
(73) Patentinhaber: Bühler Motor GmbH, 90459 Nürnberg (DE)
(72) Erfinder: RICHTER, Olaf, 90547 Stein (DE); Kirchgeßner, Daniel, 97222 Rimpar (DE); HETTYCH, Reiner, 90471 Nürnberg (DE)

(56) Entgegenhaltungen:
- EP-A1- 0 719 964
- EP-A1- 1 270 183
- EP-A2- 2 369 625
- EP-B1- 2 644 309
- DE-A1-102009 046 651
- DE-A1-102015 206 933
- DE-T5-112013 004 665
- JP-A- H07 208 585
- US-A1- 2010 304 918

## Beschreibung

Die Erfindung betrifft ein Getriebegehäuse, insbesondere für ein Umlaufrädergetriebe, mit einem Hohlrad und einem Gehäusedeckel zur längsaxialen Abdeckung des Hohlrads. Ferner betrifft die Erfindung ein Verfahren zur Herstellung eines solchen Getriebegehäuses.

Aus EP 2 644 309 B1 ist ein Getriebegehäuse bekannt, das ein Hohlrad und einen Gehäusedeckel aufweist. Das Hohlrad weist abschnittsweise eine Innenverzahnung auf und ist durch den Gehäusedeckel längsaxial abgedeckt. Dabei ist zwischen dem Gehäusedeckel und dem Hohlrad ein Überlappungsbereich gebildet, in welchem das Hohlrad und der Gehäusedeckel koaxial ineinandergreifen. Das Hohlrad weist ein für Laserlicht transparentes Material auf, so dass der Gehäusedeckel mit dem Hohlrad mittels Laser-Durchstrahlschweißen verbindbar ist.

Die bekannte Verbindung zwischen dem Hohlrad und dem Gehäusedeckel erfordert zwingend die Verwendung eines für Laserlicht durchlässigen Materials für das Hohlrad. Gleichzeitig ist es erforderlich, dass der Gehäusedeckel ein laserlichtabsorbierendes Material aufweist. Die beiden durch Laserlicht unterschiedlich beeinflussbaren Materialien müssen zudem so aufeinander abgestimmt sein, dass sie miteinander verschweißbar sind. Insbesondere müssen beide Materialien mit unterschiedlichen Laserlichteigenschaften ähnliche Schmelztemperaturen aufweisen, um ein Verschweißen zu ermöglichen.

Dies schränkt die Materialauswahl für Bauteile des Getriebegehäuses erheblich ein. Überdies ist es erforderlich, den Gehäusedeckel und das Hohlrad vor dem Schweißvorgang pressend zu verbinden, so dass ein ausreichender Kontakt zwischen den Fügeflächen besteht. Eine solche Überpressung ist insbesondere bei spritzgusstechnisch hergestellten Bauteilen schwer zu realisieren und erhöht so die Produktionskosten. Die Herstellungskosten werden auch dadurch negativ beeinflusst, dass für das Laser-Durchstrahlschweißen eine Laserlichtanlage erforderlich ist, die hohe Investitionskosten begründet. Technisch entsteht zusätzlicher Aufwand beim Laser-Durchstrahlschweißen, wenn runde Getriebegehäuse geschweißt werden sollen, da die Fügepartner hierbei rotieren müssen.

Aus der DE 10 2009 046 651 A1 ist ein Verfahren zur Herstellung eines Getriebegehäuses bekannt, bei welchem ein Kunststoffgehäuse und ein Lagerschild zunächst aufeinandergepresst und anschließend bewegt werden, um ausreichend Reibungsenergie zu erzeugen, sodass die Fügeflächen miteinander verschmelzen. Für dieses Verfahren ist es erforderlich, während der Bewegung der Fügepartner zur Erzeugung der Reibungshitze eine hohe Positionsgenauigkeit aufrecht zu erhalten. Nur so kann sichergestellt werden, dass nach Abschluss des Fügeverfahrens der Lagerschild und das Kunststoffgehäuse innerhalb der geforderten Toleranzen miteinander verbunden sind. Der Aufwand für eine solche Positionsgenauigkeit bei Bewegung der Fügepartner ist hoch und birgt Risiken im Hinblick auf die Prozesssicherheit.

Aus der EP 2 369 625 A2 ist ein Gehäusemontageverfahren zum Verbinden eines Gehäuses und einer Abdeckung durch Laserschweißen, um ein Gehäuse zu bilden, in dem ein Substrat wie ein fotoelektrischer Sensor untergebracht ist, bekannt. Das Gehäuse umfasst eine erste Seitenwand, eine Abdeckung, die mit dem Gehäuse verbunden ist und eine zweite Seitenwand, wobei die zweite Seitenwand und die erste Seitenwand miteinander in Eingriff stehen und durch Einstrahlung von Laserlicht verschweißt sind. Die erste und zweite Seitenwand bilden eine Außenwand, die laserlichtdurchlässig ist und eine Innenwand, die laserlichtabsorbierend ist.

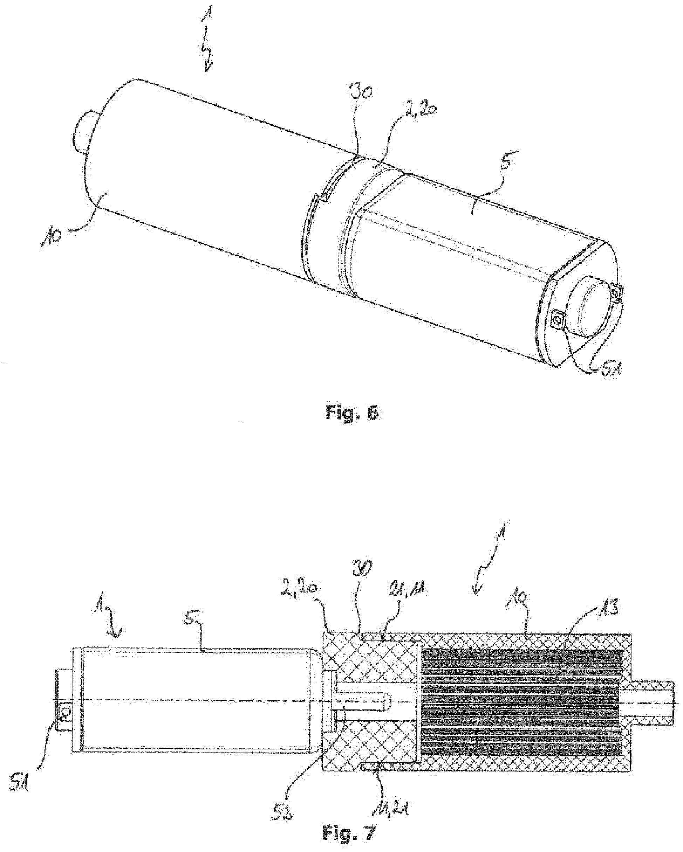

Die EP 1 270 183 A1 offenbart eine Gehäusekonstruktion und ein Verfahren zum Zusammenfügen von Gehäuseteilen, insbesondere eines Mobiltelefons. Das Mobiltelefon umfasst ein Gehäuse, das eine vordere Abdeckung und eine hintere Abdeckung und ein Fenster aufweist. Die vordere und hintere Abdeckung schließen einen Raum innerhalb des Gehäuses ein, in dem sich eine elektronische Komponente befindet. Die vordere, laserlichtdurchlässige Abdeckung und die hintere, laserlichtabsorbierende Abdeckung überlappen sich und werden durch Presspassung mittels Laserdurchstrahlschweißen oder Ultraschallschweißen miteinander verbunden. In der Figur 6 werden Konfigurationsbeispiele für die Überlappung der vorderen und hinteren Abdeckung veranschaulicht.

Aus der US 2010/0304918 A1 ist eine Planetenradträgereinheit für Getriebe bekannt, wobei ein Käfigflanschteil und ein Trägerteil durch Schweißen miteinander verbunden sind.

Die Aufgabe der Erfindung besteht folglich darin, ein Getriebegehäuse anzugeben, das einfach, kostengünstig und prozesssicher herstellbar ist. Insbesondere ist es Aufgabe der Erfindung, ein Herstellungsverfahren für ein Getriebegehäuse aufzuzeigen, das die Produktionskosten und den technischen Produktionsaufwand reduziert.

Erfindungsgemäß wird diese Aufgabe im Hinblick auf das Getriebegehäuse durch den Gegenstand des Patentanspruchs 8 und im Hinblick auf das Herstellungsverfahren durch die Gegenstände der Patentansprüche 1 und 10 gelöst.

So beruht die Erfindung auf dem Gedanken, ein Getriebegehäuse, insbesondere für ein Umlaufrädergetriebe, mit einem Hohlrad, das zumindest abschnittsweise eine Innenverzahnung aufweist, und mit einem Gehäusedeckel zur längsaxialen Abdeckung des Hohlrads anzugeben, wobei das Hohlrad und der Gehäusedeckel stirnseitig verbindbar sind und jeweils stirnseitige Fügeflächen aufweisen, an welchen das Hohlrad und der Gehäusedeckel stoffschlüssig miteinander verbunden sind. Die stoffschlüssige Verbindung erfolgt durch Heizelementschweißen oder Infrarotschweißen.

Eine stirnseitige Verbindung zwischen dem Hohlrad und dem Gehäusedeckel hat den Vorteil, dass bei der Herstellung auf andere Schweißverfahren zurückgegriffen werden kann, die es ermöglichen, unterschiedlichste Materialien miteinander stoffschlüssig zu verbinden. Insbesondere ist die Materialauswahl für Bauteile des Getriebegehäuses somit deutlich erhöht. Eine Einschränkung hinsichtlich der Laserlichtdurchlässigkeit ist damit nicht mehr erforderlich. Die zur Herstellung der stoffschlüssigen Verbindung notwendigen Anlagenkomponenten sind überdies mit geringen Investitionskosten, insbesondere im Vergleich zu Lasergeräten, zu beschaffen. Gleichzeitig erlaubt die stirnseitige Verbindung höhere Toleranzen bei der Herstellung der einzelnen Verbindungspartner, so dass insgesamt die Produktionskosten für das Getriebegehäuse gesenkt werden.

Bei einem erfindungsgemäßen Verfahren zur Herstellung eines Getriebegehäuses ist vorgesehen, dass die folgenden Verfahrensschritte zeitlich aufeinanderfolgend durchgeführt werden:
- Bereitstellen eines Hohlrads mit einer zumindest abschnittsweisen Innenverzahnung und eines Gehäusedeckels, wobei das Hohlrad und der Gehäusedeckel jeweils wenigstens eine stirnseitige Fügefläche aufweisen;
- Erhitzen der Fügeflächen durch ein Heizelement oder einen Infrarotstrahler, so dass das Hohlrad und der Gehäusedeckel abschnittsweise stirnseitig aufgeschmolzen werden; und
- Koaxiales Fügen des Hohlrads mit dem Gehäusedeckel zur Bildung einer stoffschlüssigen Verbindung zwischen den Fügeflächen.

Bei dem erfindungsgemäßen Herstellungsverfahren werden im Unterschied zum Stand der Technik die Teilschritte
- Kontaktieren der Fügepartner, insbesondere des Hohlrads und des Gehäusedeckels, und
- stoffschlüssiges Verbinden der Fügepartner
in einem einzigen Arbeitsschritt kombiniert.

Bei der Erfindung werden die Fügeflächen zunächst erhitzt, so dass sie für die stoffschlüssige Verbindung entsprechend vorbereitet sind. Anschließend erfolgen gleichzeitig das Kontaktieren der Fügepartner und das stoffschlüssige Verbinden der Fügepartner, indem die erhitzten und aufgeschmolzenen Fügeflächen in Kontakt miteinander gebracht werden. Das hat mehrere Vorteile. Einerseits kann für das Aufschmelzen der Fügeflächen eine entsprechende Hitzequelle gleichzeitig für mehrere Fügepartner durchgeführt werden. Insbesondere können mehrere Hohlräder und mehrere Gehäusedeckel gleichzeitig an ihren Fügeflächen erhitzt werden, so dass deren Fügeflächen aufschmelzen.

Das koaxiale Fügen der aufgeschmolzenen Fügeflächen verzeiht außerdem fertigungsbedingte Toleranzabweichungen, so dass die Ausgangsbauteile, also das Hohlrad und der Gehäusedeckel, mit größeren Fertigungstoleranzen hergestellt werden können. Dies reduziert den Aufwand bei der Herstellung der einzelnen Fügepartner, was sich durch eine Senkung der Herstellungskosten bemerkbar macht.

Vorzugsweise erfolgt das Erhitzen der Fügeflächen durch ein Heizelement oder einen Infrarotstrahler. Bei Verwendung eines Heizelementes kann insbesondere vorgesehen sein, dass das Heizelement in Kontakt mit der Fügefläche gelangt. Das hat den Vorteil, dass das Aufschmelzen unter Einfluss eines gewissen mechanischen Drucks erfolgen kann, so dass das Aufschmelzen der Fügeflächen gleichmäßig und schnell erfolgt. Die Verwendung eines Infrarotstrahlers ermöglicht hingegen eine berührungslose Erhitzung der Fügeflächen. Damit wird ein Anhaften des aufgeschmolzenen Materials am Heizelement vermieden.

Bei einer bevorzugten Ausführungsform des erfindungsgemäßen Verfahrens werden die Fügeflächen beim koaxialen Fügen mit Druck aufeinandergepresst, bis die Fügeflächen abgekühlt und stoffschlüssig fest verbunden sind. Mit anderen Worten erfolgt das Aufeinanderpressen der Fügeflächen vorzugsweise nur solange, bis die stoffschlüssige Verbindung ausreichend fest ist, so dass die Fügepartner auch nach Lösen des Druckes ihre Ausrichtung zueinander beibehalten.

Die Fügeflächen können in einer bevorzugten Ausführungsform über den jeweiligen Schmelzpunkt eines zur Bildung des Hohlrads und/oder des Gehäusedeckels verwendeten Kunststoffs erhitzt werden. Konkret ist vorgesehen, dass je nach verwendetem Kunststoff für das Hohlrad und/oder den Gehäusedeckel die Temperaturparameter für das Erhitzen der Fügeflächen entsprechend angepasst werden. Jedenfalls ist es zweckmäßig, so viel Wärmeenergie in die Fügeflächen einzubringen, dass diese aufschmelzen.

Die Fügeflächen können insbesondere über eine vorbestimmte Dauer erhitzt werden, wobei die Dauer abhängig von der Art und Wirksamkeit eines Strahlungselements, das zum Erhitzen der Fügeflächen dient, vorgewählt wird. Das Strahlungselement, beispielsweise ein Heizelement oder ein Infrarotstrahler, wirkt über eine vorbestimmte Dauer auf die Fügeflächen ein. Die Dauer hängt einerseits von der Art des Strahlungselements (Heizelement oder Infrarotstrahler) ab. Andererseits hängt die vorgewählte Dauer der Erhitzung der Fügeflächen von dem Betrag der Wärmeenergie ab, die von dem Strahlungselement aufgebracht wird. Schließlich ist die Dauer der Erhitzung abhängig von dem verwendeten Kunststoff des jeweils aufzuschmelzenden Materials.

Bei einer weiteren bevorzugten Ausführungsform des erfindungsgemäßen Herstellungsverfahrens ist vorgesehen, dass zum koaxialen Fügen des Hohlrads und des Gehäusedeckels eine Fügevorrichtung vorgesehen ist. Insbesondere können das Hohlrad und der Gehäusedeckel in eine Fügevorrichtung eingelegt und zwei pneumatische Zylinder und/oder eine servomotorische Achse mit einer Fügekraft beaufschlagt werden. Die Fügekraft ist vorzugsweise in Abhängigkeit von der Größe der Fügeflächen voreingestellt. Die Verwendung einer Fügevorrichtung, die eine Fügekraft auf das Hohlrad und den Gehäusedeckel aufbringt, stellt sicher, dass die Fügepartner, also das Hohlrad und der Gehäusedeckel, grundsätzlich mit gleicher Kraft miteinander gefügt werden. Das erhöht die Prozesssicherheit des Herstellungsverfahrens. Insbesondere ist so gewährleistet, dass eine stabile und im Wesentlichen gleichförmige Verbindung der Fügepartner über eine gesamte Produktionscharge mit gleichbleibender Qualität erreicht wird.

Vorzugsweise ist bei dem erfindungsgemäßen Verfahren vorgesehen, dass das Hohlrad und der Gehäusedeckel nach dem Fügen unter Aufrechterhaltung einer Fügekraft über einen vorbestimmten Zeitraum abgekühlt werden. Der vorbestimmte Zeitraum kann vom verwendeten Material und von der Baugröße des Getriebegehäuses abhängig sein.

Für das zuvor beschriebene Herstellungsverfahren gilt in bevorzugten Ausführungsformen, dass die stirnseitigen Fügeflächen senkrecht zu einer Rotationsachse des Hohlrads ausgerichtet sind. Mit anderen Worten werden das Hohlrad und der Gehäusedeckel vorzugsweise mit einem Stumpfstoß gefügt bzw. stumpf verschweißt.

Ein weiterer Aspekt der Erfindung betrifft ein Getriebegehäuse, insbesondere für ein Umlaufrädergetriebe, mit einem Hohlrad, das zumindest abschnittsweise eine Innenverzahnung aufweist, und mit einem Gehäusedeckel zur längsaxialen Abdeckung des Hohlrads. Das Hohlrad und der Gehäusedeckel greifen koaxial ineinander, so dass ein ringförmiger Überlappungsbereich gebildet ist. In dem Überlappungsbereich berühren sich Fügeflächen des Hohlrads und des Gehäusedeckels. Erfindungsgemäß ist vorgesehen, dass das Hohlrad und der Gehäusedeckel im Überlappungsbereich jeweils konische Fügeflächen aufweisen und entlang der Fügeflächen stoffschlüssig, insbesondere durch Rotationsreibschweißen, miteinander verbunden sind.

Der Einsatz konischer Fügeflächen ermöglicht es, auf einfache Art und Weise eine Presspassung zwischen den Fügepartnern herbeizuführen. Damit ist sichergestellt, dass die Fügeflächen im Überlappungsbereich ausreichend fest miteinander verbunden sind, so dass insbesondere mittels Rotationsreibschweißen schnell und effizient eine stoffschlüssige Verbindung hergestellt werden kann. Die konischen Fügeflächen ermöglichen auch eine einfache Ausrichtung der Bauteile zueinander bei der Herstellung. Das beschleunigt den Herstellungsvorgang und reduziert insgesamt die Produktionskosten.

Vorzugsweise ist bei der Erfindung vorgesehen, dass an die Fügeflächen des Hohlrads und des Gehäusedeckels jeweils eine auf einem Außenumfang umlaufende, stirnseitig offene Ausnehmung angrenzt. Die Ausnehmungen bilden gemeinsam eine Ringnut, die eine Schweißwulst aufnimmt. Das hat den Vorteil, dass die Schweißwulst nicht über den Außendurchmesser des Getriebegehäuses vorsteht. Dies vereinfacht die Herstellung und gewährleistet ferner, dass die Außendimensionen des Getriebegehäuses eine hohe Toleranzgenauigkeit aufweisen.

Ein erfindungsgemäßes Verfahren insbesondere eines solchen Getriebegehäuses umfasst die folgenden Schritte, die zeitlich aufeinanderfolgen:
- Bereitstellen eines Hohlrads mit einer zumindest abschnittsweisen Innenverzahnung und eines Gehäusedeckels, wobei das Hohlrad und der Gehäusedeckel zueinander komplementäre, konische Fügeflächen aufweisen;
- Koaxiales Fügen des Hohlrads mit dem Gehäusedeckel zur Herstellung eines Flächenkontakts zwischen den konischen Fügeflächen, wobei ein Überlappungsbereich gebildet wird;
- Erhitzen des Überlappungsbereichs, insbesondere durch Rotationsreibschweißen, so dass das Hohlrad und der Gehäusedeckel im Überlappungsbereich stoffschlüssig verbunden werden.

Die zueinander komplementären konischen Fügeflächen ermöglichen es, die Fügeflächen einfach und mit wenig Positionierungsaufwand flächenpressend miteinander zu verbinden. Damit wird ein guter Kontakt zwischen den Fügeflächen bereitgestellt, wodurch sich Wärmeenergie in beide Fügepartner erstrecken kann. Dies erleichtert das Verschweißen der Fügepartner.

Die komplementären konischen Fügeflächen bilden im Wesentlichen eine selbstzentrierende Einrichtung, so dass auf ein aufwändiges Vorpositionieren verzichtet werden kann. Außerdem bilden die konischen Fügeflächen einen Toleranzausgleich, so dass die Fertigung der Fügepartner, insbesondere des Hohlrads und des Gehäusedeckels, mit relativ hohen Fertigungstoleranzen möglich ist. Insgesamt wird der Herstellungsprozess auf diese Weise nicht nur beschleunigt, sondern gleichzeitig auch kostengünstig durchführbar.

Bei dem erfindungsgemäßen Verfahren ist in einer bevorzugten Variante vorgesehen, dass bei der Herstellung des Flächenkontakts eine Pressverbindung zwischen den Fügeflächen des Hohlrads und des Gehäusedeckels gebildet wird. Mit anderen Worten werden das Hohlrad und der Gehäusedeckel mit einer Fügekraft gefügt, so dass eine Pressverbindung hergestellt ist. Das verbessert den anschließenden Schweißvorgang.

Für alle vorgenannten Varianten der erfindungsgemäßen Herstellungsverfahren ist in einer bevorzugten Ausführungsform vorgesehen, dass der Gehäusedeckel durch ein Lagerschild eines Motors oder durch ein Adapterelement gebildet ist, das zur Verbindung des Getriebegehäuses mit einem Motor vorgesehen ist. Auf diese Weise kann das Getriebegehäuse unmittelbar an einen Motor angebunden werden, wodurch insgesamt eine kompakte Gestaltung und eine einfache Verfahrensführung bei der Produktion erreicht wird.

Im Hinblick auf das Adapterelement kann bevorzugt vorgesehen sein, dass dieses getriebeseitig mit dem Hohlrad schweißverbunden oder schweißverbindbar ist. Motorseitig kann das Adapterelement einen universellen Anschluss zur Verbindung mit verschiedenen Motoren, insbesondere Elektromotoren, aufweisen. Das Adapterelement bildet also eine universale Schnittstelle zu unterschiedlichen Motoren. Auf diese Weise kann das Getriebegehäuse mittels des Adapterelements mit unterschiedlichen Motoren verbunden werden, so dass sich eine Standardisierung einzelner Bauteile positiv auf die Produktionskosten auswirken kann. Insbesondere kann das Getriebegehäuse so für unterschiedliche Baureihen von Motorgetriebekombinationen eingesetzt werden. Mit anderen Worten ist das Getriebegehäuse baureihenübergreifend einsetzbar (Baukastenprinzip).

Im Allgemeinen gilt, dass die Verbindung, insbesondere die stoffschlüssige Verbindung, zwischen dem Hohlrad und dem Gehäusedeckel nicht ausschließlich stirnseitig erfolgen muss. Die Erfindung umfasst auch Ausführungsformen, bei welchen zusätzlich zur stirnseitig stoffschlüssigen Verbindung zumindest sich in Umfangsrichtung erstreckende Flächenabschnitte des Hohlrads und des Gehäusedeckels überlappen, insbesondere der Gehäusedeckel zumindest teilweise in das Hohlrad eingreift. Die überlappenden Flächenabschnitte bilden einen Überlappungsbereich. Im Überlappungsbereich kann eine weitere stoffschlüssige Verbindung vorgesehen sein. Insofern können die oben beschriebenen Ausführungsformen der Erfindung miteinander kombiniert sein.

Die Erfindung wird im Folgenden anhand von Ausführungsbeispielen unter Bezugnahme auf die beigefügten, schematischen Zeichnungen näher erläutert. Darin zeigen
- Fig. 1 und 2: jeweils eine Schnittansicht durch einen Verbindungsbereich eines erfindungsgemäßen Getriebegehäuses nach einem bevorzugten Ausführungsbeispiel, wobei das Hohlrad und der Gehäusedeckel stirnseitig miteinander verbunden sind;
- Fig. 3: eine Schnittansicht durch einen Überlappungsbereich eines erfindungsgemäßen Getriebegehäuses nach einem bevorzugten Ausführungsbeispiel, wobei das Hohlrad und der Gehäusedeckel zueinander komplementäre konische Fügeflächen aufweisen;
- Fig. 4: eine perspektivische Ansicht einer Motor-Getriebegehäuse-Kombination nach einem bevorzugten Ausführungsbeispiel, wobei das Hohlrad und der Gehäusedeckel stumpf aufeinanderliegende Fügeflächen aufweisen;
- Fig. 5: eine Schnittansicht durch die Motor-Getriebegehäuse-Kombination gemäß Fig. 4;
- Fig. 6: eine perspektivische Ansicht einer Motor-Getriebegehäuse-Kombination nach einem bevorzugten Ausführungsbeispiel, wobei zwischen dem Hohlrad und dem Gehäusedeckel eine Ringnut zur Aufnahme einer Schweißwulst ausgebildet ist; und
- Fig. 7: eine Querschnittsansicht durch die Motor-Getriebegehäuse-Kombination gemäß Fig. 6.

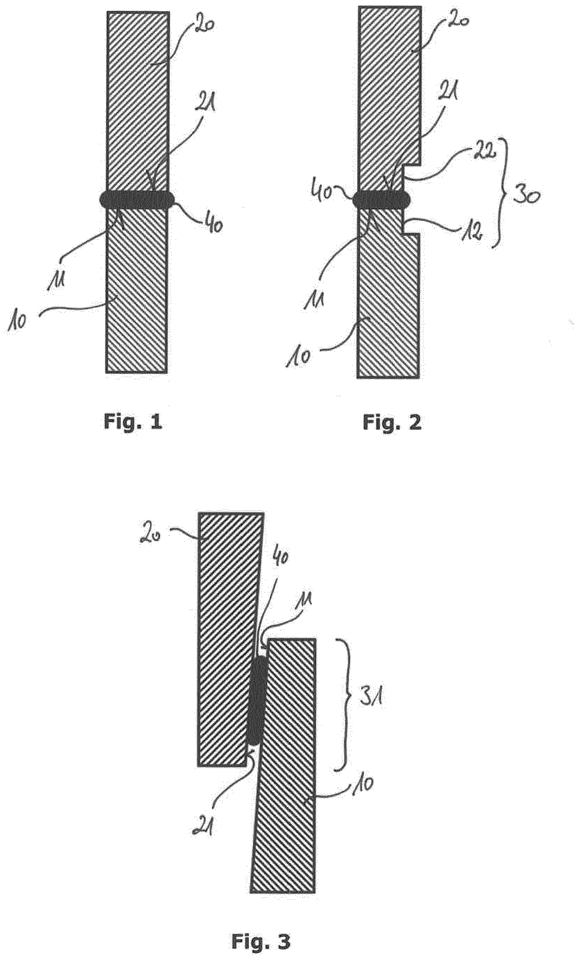

In den Fig. 1 - 3 sind schematisch verschiedene Möglichkeiten für die stoffschlüssige Verbindung zwischen einem Hohlrad 10 und einem Gehäusedeckel 20 eines Getriebegehäuses 1 gezeigt. Bei den Ausführungsbeispielen gemäß Fig. 1 und 2 sind das Hohlrad 10 und der Gehäusedeckel 20 stumpf miteinander verbunden. Dazu weisen das Hohlrad 10 und der Gehäusedeckel 20 jeweils stirnseitige Fügeflächen 11, 21 auf, die stumpf aufeinanderliegen und mittels einer Schweißwulst 40 stoffschlüssig miteinander verbunden sind. Um zu vermeiden, dass sich die Schweißwulst 40 über den Außenumfang des Hohlrads 10 erstreckt und so die Außendimensionen des Getriebegehäuses 1 beeinflusst, kann bevorzugt vorgesehen sein, dass das Hohlrad 10 und der Gehäusedeckel 20 jeweils eine Ausnehmung 12, 22 aufweisen. Die aneinander angrenzenden Ausnehmungen 12, 22, grenzen unmittelbar an die Fügeflächen 11, 21 an und erstrecken sich über den Außenumfang des Hohlrads 10 bzw. des Gehäusedeckels 20. Die Ausnehmungen 12, 22 sind vorzugsweise komplementär zueinander ausgebildet, so dass sich im verbundenen Zustand des Hohlrads 10 mit dem Gehäusedeckel 20 eine Ringnut 30 zeigt. Die Ringnut 30 erstreckt sich vorzugsweise umlaufend um einen Außenumfang des Hohlrads 10 bzw. des Gehäusedeckels 20. Diese Variante einer Fügeverbindung mit einer Ringnut 30 ist beispielhaft in Fig. 2 gezeigt.

Die stoffschlüssige Verbindung zwischen dem Hohlrad 10 und dem Gehäusedeckel 20 erfolgt vorzugsweise durch ein Schweißverfahren. Dazu ist insbesondere vorgesehen, dass das Hohlrad 10 und der Gehäusedeckel 20 jeweils aus einem Kunststoffmaterial gebildet sind. Durch Erhitzen des Kunststoffmaterials wird eine stoffschlüssige Verbindung hergestellt. Dabei kann einerseits vorgesehen sein, dass für die stoffschlüssige Verbindung ein Heizelementschweißverfahren oder ein Infrarotschweißverfahren eingesetzt werden. In diesen beiden Fällen werden die Fügeflächen 11, 21 zunächst erhitzt, bis die Schmelztemperatur des Kunststoffmaterials des Hohlrads 10 bzw. des Gehäusedeckels 20 erreicht bzw. überschritten ist. Dadurch schmilzt das Material im Bereich der Fügeflächen 11, 21 auf. Die aufgeschmolzenen Fügeflächen werden anschließend koaxial zueinander gefügt, so dass sich die aufgeschmolzenen Fügeflächen stoffschlüssig miteinander verbinden.

Alternativ kann vorgesehen sein, die Fügeflächen 11, 21 vor dem Erhitzen miteinander zu verbinden, insbesondere mit einer Fügekraft aufeinanderzupressen. Anschließend kann eine Erhitzung der aufeinandergepressten Fügeflächen 11, 21 beispielsweise mittels Rotationsreibschweißen erfolgen. Dadurch wird ebenfalls eine Schweißverbindung hergestellt. Beim Rotationsreibschweißen besteht der Vorteil, dass durch den unmittelbaren Kontakt mit dem um die Schweißnaht rotierenden Heizelement ein Auswölben einer Schweißwulst 40 vermieden wird. Insofern kann auf eine Ringnut 30, wie sie in Fig. 2 dargestellt ist verzichtet werden.

Ferner ist es möglich, das Hohlrad 10 mit dem Gehäusedeckel 20 durch Ultraschallschweißen zu verbinden. Dazu ist insbesondere vorgesehen, dass wenigstens eine Fügefläche 11 oder 21 einen Energierichtungsgeber aufweist. Der Energierichtungsgeber kann beispielsweise eine Kante entlang der Fügeflächengeometrie sein. Der Energierichtungsgeber dient dazu, den in das Material eingeleiteten Ultraschall zu bündeln, so dass gezielt Energie in den Bereich der Fügeflächen eingebracht wird. Vorzugsweise wird beim Ultraschallschweißen die den Ultraschall erzeugende Sonotrode stirnseitig auf den Gehäusedeckel aufgesetzt. Der Ultraschall durchdringt dabei den Gehäusedeckel und gelangt so an die Fügeflächen 11, 21 zwischen dem Gehäusedeckel 20 und dem Hohlrad 10.

In Fig. 3 ist schematisch ein Überlappungsbereich 31 zwischen dem Hohlrad 10 und dem Gehäusedeckel 20 gezeigt. Das Hohlrad 10 und der Gehäusedeckel 20 weisen dabei jeweils zueinander komplementäre Fügeflächen 11, 21 auf, die jeweils konisch ausgebildet sind. Die Konusform der Fügeflächen 11, 21 ist zueinander komplementär, so dass die Fügeflächen 11, 21 ineinander gleiten können. Auf diese Weise können das Hohlrad 10 und der Gehäusedeckel 20 einfach zueinander positioniert werden. Außerdem wird durch axiales Aufbringen einer Fügekraft erreicht, dass sich die Fügeflächen 11, 21 unter Druck berühren, also eine Pressverbindung hergestellt wird. Die Pressverbindung ist vorteilhaft, um mittels Rotationsreibschweißen anschließend eine Schweißwulst 40 zu erzeugen, also die pressverbundenen Fügeflächen 11, 21 aufzuschmelzen und stoffschlüssig miteinander zu verbinden.

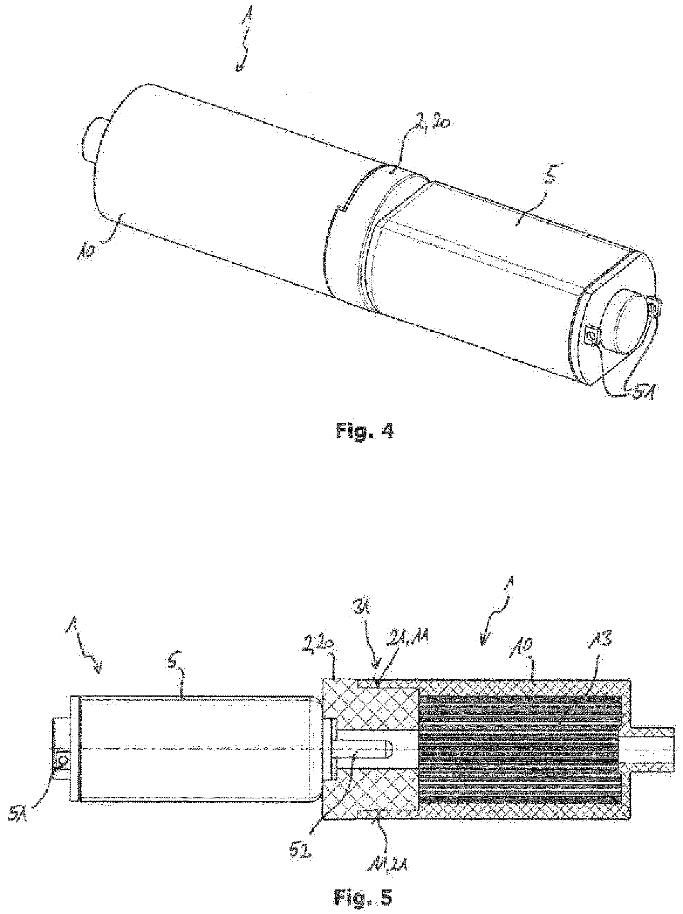

Die Fig. 4 - 7 zeigen jeweils eine Kombination aus einem Getriebegehäuse 1 und einem Motor 5, der mittels eines Motoradapters 2 mit dem Getriebegehäuse 1 verbunden ist. Der Motoradapter 2 wird durch den Gehäusedeckel 20 gebildet, der mit dem Hohlrad 10 des Getriebegehäuses 1 schweißverbunden ist. Der Motor 5 ist als Elektromotor ausgebildet und weist entsprechende elektrische Kontakte 51 an einem dem Getriebegehäuse 1 gegenüberliegenden Ende auf. Wie in den Schnittdarstellungen gemäß Fig. 5 und 7 erkennbar ist, ist der Motor 5 mit einer Motorwelle 52 ausgestattet, die in den Motoradapter 2 hineinragt. Die Motorwelle 52 kann mit einer Getriebewelle verbindbar oder verbunden sein.

Der Motoradapter 2 wird durch den Gehäusedeckel 20 gebildet und weist ein motorseitiges Ende auf, an welchem der Motoradapter 2 derart ausgebildet ist, dass er mit verschiedenen Motoren 5 verbindbar ist. Insbesondere können mit dem Motoradapter zwei oder mehrere verschiedene Motorgrößen verbindbar sein. Der Motoradapter 2 bildet somit eine Plattform für ein Baukastensystem, wobei mehrere, unterschiedlich leistungsstarke Motoren 5 mit dem Getriebegehäuse 1 verbunden werden können.

Das Hohlrad 10 weist bei allen Ausführungsformen gemäß Fig. 4 - 7 jeweils eine Innenverzahnung 13 auf. Die Innenverzahnung 13 erstreckt sich über die gesamte Länge eines distalen Abschnitts des Hohlrads 10, wobei das Hohlrad 10 im distalen Abschnitt eine erhöhte Wandstärke aufweist. An dem distalen Abschnitt schließt sich proximal ein Überlappungsbereich 31 an, in welchem das Hohlrad 10 eine reduzierte Wandstärke aufweist. Der Außendurchmesser des Hohlrads 10 ist im distalen Abschnitt und im proximalen Abschnitt (Überlappungsbereich 31) identisch.

Der Motoradapter 2 bzw. der Gehäusedeckel 20 weist ebenfalls einen proximalen Abschnitt und einen distalen Abschnitt auf. Im proximalen Abschnitt weist der Motoradapter 2 einen Außendurchmesser auf, der dem Außendurchmesser des Hohlrads 10 entspricht. Im distalen Abschnitt, der dem Überlappungsbereich 31 entspricht, weist der Motoradapter einen Außendurchmesser auf, der im Wesentlichen dem Innendurchmesser des Hohlrads 10 im proximalen Abschnitt entspricht. Insofern sind zwischen dem Motoradapter 2 bzw. Gehäusedeckel 20 und dem Hohlrad 10 zylinderförmige Fügeflächen 11, 21 ausgebildet. Der Motoradapter 2 bzw. Gehäusedeckel 20 ist in das Hohlrad 10 eingeschoben, so dass sich die Fügeflächen 11, 21 überlappen und den Überlappungsbereich 31 bilden.

Durch den Überlappungsbereich ist es möglich, das Hohlrad 10 und dem Motoradapter 2 bzw. Gehäusedeckel 20 mittels Rotationsreibschweißen stoffschlüssig miteinander zu verbinden. Konkret ist dazu vorgesehen, dass ein Rotationsreibschweißgerät um den Außenumfang des Überlappungsbereichs 31 geführt wird, wodurch das Material der Fügeflächen 11, 21 erhitzt wird. Die Erhitzung erfolgt über den Schmelzpunkt der verwendeten Materialien für das Hohlrad 10 oder den Gehäusedeckel 20, so dass im Bereich des Wärmeeintrags eine stoffschlüssige Verbindung zwischen dem Hohlrad 10 und dem Gehäusedeckel 20 entsteht.

Das Ausführungsbeispiel gemäß Fig. 6 und 7 unterscheidet sich von dem Ausführungsbeispiel gemäß Fig. 4 und 5 dadurch, dass bei dem Ausführungsbeispiel gemäß Fig. 4 und 5 der proximale Abschnitt des Motoradapters 2 durch eine Ringfläche mit dem distalen Abschnitt des Motoradapters 2 verbunden ist, die sich senkrecht zu einer Längsachse des Hohlrads erstreckt.

Bei dem Ausführungsbeispiel gemäß Fig. 6 und 7 ist hingegen eine schräge Ringfläche vorgesehen, die im Wesentlichen konisch zur Längsachse des Hohlrads 10 ausgerichtet ist. Dadurch ist zwischen dem proximalen Abschnitt des Motoradapters 2 und dem proximalen Abschnitt des Hohlrads 10 bzw. des Überlappungsbereichs 31, eine Ringnut 30 ausgebildet. Die Ringnut 30 weist im Wesentlichen eine Querschnittsform auf, die einem rechtwinkligen Dreieck entspricht. Die Ringnut 30 ermöglicht es, beim Rotationsreibschweißen fließendes Material des Hohlrads 10 aufzunehmen. Damit ist sichergestellt, dass nach dem Schweißvorgang der Außendurchmesser des Getriebegehäuses 10 gegenüber dem unverschweißten Zustand unverändert ist.

Bei allen Ausführungsbeispielen gemäß Fig. 4 - 7 ist insbesondere in Fig. 4 und 6 gut erkennbar, dass die Ringflächen zwischen dem proximalen Bereich und dem distalen Bereich des Motoradapters 2 sowie die komplementären Ringflächen des Hohlrads 10 sich über unterschiedliche Ebenen erstrecken. Mit anderen Worten sind die Ringflächen nicht durchgehend über den gesamten Umfang des Hohlrads 10 bzw. des Motoradapters 20 in einer Linie angeordnet, sondern in axialer Richtung des Hohlrads 10 stellenweise versetzt. Dies ermöglicht eine Rotationsausrichtung des Motoradapters 2 zum Hohlrad 10. Gleichzeitig ist damit eine Verdrehsicherung erreicht.

### Bezugszeichenliste

- 1: Getriebegehäuse
- 2: Motoradapter
- 5: Motor
- 10: Hohlrad
- 11: Fügefläche des Hohlrads
- 12: Ausnehmung am Hohlrad
- 13: Innenverzahnung
- 20: Gehäusedeckel
- 21: Fügefläche des Gehäusedeckels
- 22: Ausnehmung am Gehäusedeckel
- 30: Ringnut
- 31: Überlappungsbereich
- 40: Schweißwulst

## Patentansprüche

1. Verfahren zur Herstellung eines Getriebegehäuses, umfassend die folgenden, zeitlich aufeinanderfolgenden Schritte:
- Bereitstellen eines Hohlrads (10) mit einer zumindest abschnittsweisen Innenverzahnung und eines Gehäusedeckels (20), wobei das Hohlrad (10) und der Gehäusedeckel (20) jeweils wenigstens eine stirnseitige Fügefläche (11, 21) aufweisen;
- Erhitzen der Fügeflächen (11, 21) durch ein Heizelement oder einen Infrarotstrahler, so dass das Hohlrad (10) und der Gehäusedeckel (20) abschnittsweise stirnseitig aufgeschmolzen werden; und
- Koaxiales Fügen des Hohlrads (10) mit dem Gehäusedeckel (20) zur Bildung einer stoffschlüssigen Verbindung zwischen den Fügeflächen (11, 21).

2. Verfahren nach Anspruch 1,
**dadurch gekennzeichnet, dass**
die Fügeflächen (11, 21) beim koaxialen Fügen mit Druck aufeinandergepresst werden, bis die Fügeflächen (11, 21) abgekühlt und stoffschlüssig fest verbunden sind.

3. Verfahren nach Anspruch 1 oder 2,
**dadurch gekennzeichnet, dass**
die Fügeflächen (11, 21) über den jeweiligen Schmelzpunkt eines zur Bildung des Hohlrads (10) und/oder des Gehäusedeckels (20) verwendeten Kunststoffs erhitzt werden.

4. Verfahren nach einem der Ansprüche 1 bis 3,
**dadurch gekennzeichnet, dass**
die Fügeflächen (11, 21) über eine vorbestimmte Dauer erhitzt werden, wobei die Dauer abhängig von der Art und Wirksamkeit eines Strahlungselements, das zum Erhitzen der Fügeflächen (11, 21) dient, vorgewählt wird.

5. Verfahren nach einem der Ansprüche 1 bis 4,
**dadurch gekennzeichnet, dass**
das Hohlrad (10) und der Gehäusedeckel (20) in eine Fügevorrichtung eingelegt und durch zwei pneumatische Zylinder und/oder eine servomotorische Achse mit einer Fügekraft beaufschlagt werden, wobei die Fügekraft in Abhängigkeit von der Größe der Fügeflächen (11, 21) voreingestellt ist.

6. Verfahren nach einem der Ansprüche 1 bis 5,
**dadurch gekennzeichnet, dass**
das Hohlrad (10) und der Gehäusedeckel (20) nach dem Fügen unter Aufrechterhaltung einer Fügekraft über einen vorbestimmten Zeitraum abgekühlt werden, wobei der vorbestimmte Zeitraum vom verwendeten Material und von der Baugröße abhängig ist.

7. Verfahren nach einem der vorhergehenden Ansprüche,
**dadurch gekennzeichnet, dass**
die stirnseitigen Fügeflächen (11, 21) senkrecht zu einer Rotationsachse des Hohlrads (10) ausgerichtet sind.

8. Getriebegehäuse, insbesondere für ein Umlaufrädergetriebe, mit einem Hohlrad (10), das zumindest abschnittsweise eine Innenverzahnung aufweist, und mit einem Gehäusedeckel (20) zur längsaxialen Abdeckung des Hohlrads, wobei das Hohlrad (10) und der Gehäusedeckel (20) koaxial ineinandergreifen, so dass ein ringförmiger Überlappungsbereich (31) gebildet ist, in welchem sich Fügeflächen (11, 21) des Hohlrads (10) und des Gehäusedeckels (20) berühren,
**dadurch gekennzeichnet, dass**
das Hohlrad (10) und der Gehäusedeckel (20) im Überlappungsbereich (31) jeweils konische Fügeflächen (11, 21) aufweisen und entlang der Fügeflächen (11, 21) stoffschlüssig, insbesondere durch Rotationsreibschweißen, miteinander verbunden sind.

9. Getriebegehäuse nach Anspruch 8,
**dadurch gekennzeichnet, dass**
an die Fügeflächen (11, 21) des Hohlrads (10) und des Gehäusedeckels (20) jeweils eine auf einem Außenumfang umlaufende, stirnseitig offene Ausnehmung (12, 22) angrenzt, wobei die Ausnehmungen (12, 22) gemeinsam eine Ringnut (30) bilden, die eine Schweißwulst (40) aufnimmt.

10. Verfahren zur Herstellung eines Getriebegehäuses, insbesondere nach Anspruch 8, umfassend die folgenden, zeitlich aufeinanderfolgenden Schritte:
- Bereitstellen eines Hohlrads (10) mit einer zumindest abschnittsweisen Innenverzahnung und eines Gehäusedeckels (20), wobei das Hohlrad (10) und der Gehäusedeckel (20) zueinander komplementäre, konische Fügeflächen (11, 21) aufweisen;
- Koaxiales Fügen des Hohlrads (10) mit dem Gehäusedeckel (20) zur Herstellung eines Flächenkontakts zwischen den konischen Fügeflächen (11, 21), wobei ein Überlappungsbereich (31) gebildet wird; und
- Erhitzen des Überlappungsbereichs (31), insbesondere durch Rotationsreibschweißen, so dass das Hohlrad (10) und der Gehäusedeckel (20) im Überlappungsbereich (31) stoffschlüssig verbunden werden.

11. Verfahren nach Anspruch 10,
**dadurch gekennzeichnet, dass**
bei der Herstellung des Flächenkontakts eine Pressverbindung zwischen den Fügeflächen (11, 21) des Hohlrads (10) und des Gehäusedeckels (20) gebildet wird.

12. Verfahren nach einem der vorhergehenden Ansprüche,
**dadurch gekennzeichnet, dass**
der Gehäusedeckel (20) durch ein Lagerschild eines Motors oder durch ein Adapterelement gebildet ist, das zur Verbindung des Getriebegehäuses mit einem Motor vorgesehen ist.

13. Verfahren nach Anspruch 12,
**dadurch gekennzeichnet, dass**
das Adapterelement getriebeseitig mit dem Hohlrad (10) schweißverbunden oder schweißverbindbar ist und motorseitig einen universellen Anschluss zur Verbindung mit verschiedenen Motoren, insbesondere Elektromotoren, aufweist.

## Claims

1. A method for producing a gear unit housing, comprising the following, successive steps:
- making available a ring gear (10) with internal gearing at least in portions, and a housing cover (20), wherein the ring gear (10) and the housing cover (20) each have at least one end-face joining face (11, 21);
- heating the joining faces (11, 21) by a heating element or an infrared emitter, so that the ring gear (10) and the housing cover (20) are melted in portions on the end face; and
- coaxially joining the ring gear (10) to the housing cover (20) to form a material-formed bond between the joining faces (11, 21).

2. A method according to claim 1,
**characterised in that**
the joining faces (11, 21) upon coaxial jointing are pressed together by pressure until the joining faces (11, 21) are cooled and are connected securely by a material-formed bond.

3. A method according to claim 1 or 2,
**characterised in that**
the joining faces (11, 21) are heated to above the respective melting point of a plastics material used for forming the ring gear (10) and/or the housing cover (20).

4. A method according to one of claims 1 to 3,
**characterised in that**
the joining faces (11, 21) are heated for a predetermined duration, the duration being preselected dependent on the type and effectiveness of a radiation element which serves to heat the joining faces (11, 21).

5. A method according to one of claims 1 to 4,
**characterised in that**
the ring gear (10) and the housing cover (20) are placed in a joining device and have a joining force applied by two pneumatic cylinders and/or a servomotor axle, the joining force being preset dependent on the size of the joining faces (11, 21).

6. A method according to one of claims 1 to 5,
**characterised in that**
the ring gear (10) and the housing cover (20) after the joining are cooled while maintaining a joining force for a predetermined period, the predetermined period being dependent on the material used and the overall size.

7. A method according to one of the preceding claims,
**characterised in that**
the end-face joining faces (11, 21) are oriented perpendicularly to an axis of rotation of the ring gear (10).

8. A gear unit housing, in particular for a planetary gear, with a ring gear (10) which at least in portions has internal gearing, and with a housing cover (20) for longitudinally axially covering the ring gear, wherein the ring gear (10) and the housing cover (20) coaxially interlock, so that an annular region of overlap (31) is formed in which joining faces (11, 21) of the ring gear (10) and of the housing cover (20) touch,
**characterised in that**
the ring gear (10) and the housing cover (20) in the region of overlap (31) each have conical joining faces (11, 21) and along the joining faces (11, 21) are connected together by a material-formed bond, in particular by rotary friction welding.

9. A gear unit housing according to claim 8,
**characterised in that**
a cutout (12, 22) which runs around on an outer periphery and is open on the end face adjoins the joining faces (11, 21) of the ring gear (10) and of the housing cover (20) in each case, the cutouts (12, 22) jointly forming an annular groove (30) which receives a welding bead (40).

10. A method for producing a gear unit housing, in particular according to claim 8, comprising the following, successive steps:
- making available a ring gear (10) with internal gearing at least in portions, and a housing cover (20), wherein the ring gear (10) and the housing cover (20) have conical joining faces (11, 21) which are complementary to each other;
- coaxially joining the ring gear (10) to the housing cover (20) to produce a surface contact between the conical joining faces (11, 21), wherein a region of overlap (31) is formed; and
- heating the region of overlap (31), in particular by rotary friction welding, so that the ring gear (10) and the housing cover (20) are connected by a material-formed bond in the region of overlap (31).

11. A method according to claim 10,
**characterised in that**
when producing the surface contact a press-fit connection is formed between the joining faces (11, 21) of the ring gear (10) and the housing cover (20).

12. A method according to one of the preceding claims,
**characterised in that**
the housing cover (20) is formed by an end shield of a motor or by an adapter element which is provided for connecting the gear unit housing to a motor.

13. A method according to claim 12,
**characterised in that**
the adapter element on the gear-unit side is or can be connected by welding to the ring gear (10) and on the motor side has a universal connection for connecting to various motors, in particular electric motors.

## Revendications

1. Procédé de fabrication d'un boîtier de boîte de vitesses, comprenant les étapes suivantes, se succédant dans le temps :
- fourniture d'une roue à denture intérieure (10) avec une denture intérieure au moins par endroits et d'un couvercle de boîtier (20), dans lequel la roue à denture intérieure (10) et le couvercle de boîtier (20) présentent respectivement au moins une surface de clinchage (11, 21) sur le côté frontal ;
- chauffage des surfaces de clinchage (11, 21) par un élément de chauffe ou un radiateur à rayons infrarouges, de sorte que la roue à denture intérieure (10) et le couvercle de boîtier (20) soient fondus par endroits sur le côté frontal ; et
- clinchage coaxial de la roue à denture intérieure (10) avec le couvercle de boîtier (20) pour former une liaison matérielle entre les surfaces de clinchage (11, 21).

2. Procédé selon la revendication 1,
**caractérisé en ce que**
les surfaces de clinchage (11, 21) sont pressées l'une sur l'autre par pression lors du clinchage coaxial, jusqu'à ce que les surfaces de clinchage (11, 21) aient été refroidies et solidement reliées de façon matérielle.

3. Procédé selon la revendication 1 ou 2,
**caractérisé en ce que**
les surfaces de clinchage (11, 21) sont chauffées au-dessus du point de fusion respectif d'une matière plastique utilisée pour former la roue à denture intérieure (10) et/ou le couvercle de boîtier (20).

4. Procédé selon l'une des revendications 1 à 3,
**caractérisé en ce que**
les surfaces de clinchage (11, 21) sont chauffées pendant une durée prédéterminée, dans lequel la durée est présélectionnée en fonction du type et de la performance d'un élément rayonnant qui sert à chauffer les surfaces de clinchage (11, 21).

5. Procédé selon l'une des revendications 1 à 4,
**caractérisé en ce que**
la roue à denture intérieure (10) et le couvercle de boîtier (20) sont insérés dans un dispositif de clinchage et sollicités par deux cylindres pneumatiques et/ou un axe servomoteur avec une force de clinchage, dans lequel la force de clinchage est préréglée en fonction de la taille des surfaces de clinchage (11, 21).

6. Procédé selon l'une des revendications 1 à 5,
**caractérisé en ce que**
la roue à denture intérieure (10) et le couvercle de boîtier (20) sont refroidis après le clinchage en maintenant une force de clinchage pendant une durée prédéterminée, dans lequel la durée prédéterminée est fonction du matériau utilisé et des dimensions.

7. Procédé selon l'une des revendications précédentes,
**caractérisé en ce que**
les surfaces de clinchage (11, 21) sur le côté frontal sont orientées à la verticale d'un axe de rotation de la roue à denture intérieure (10).

8. Boîtier de boîte de vitesses, en particulier pour une boîte de vitesses de roues planétaires, avec une roue à denture intérieure (10), qui présente au moins par endroits une denture intérieure, et avec un couvercle de boîtier (20) pour un recouvrement longitudinal et axial de la roue à denture intérieure, dans lequel la roue à denture intérieure (10) et le couvercle de boîtier (20) s'engrènent de façon coaxiale, de sorte que soit formée une zone de chevauchement (31) annulaire dans laquelle des surfaces de clinchage (11, 21) de la roue à denture intérieure (10) et du couvercle de boîtier (20) se touchent,
**caractérisé en ce que**
la roue à denture intérieure (10) et le couvercle de boîtier (20) présentent respectivement des surfaces de clinchage (11, 21) coniques dans la zone de chevauchement (31) et sont reliés ensemble par liaison matérielle le long des surfaces de clinchage (11, 21), en particulier par soudage par friction par rotation.

9. Boîtier de boîte de vitesses selon la revendication 8,
**caractérisé en ce que**
un évidement (12, 22) se déroulant sur une périphérie extérieure et ouvert sur le côté frontal est respectivement contigu des surfaces de clinchage (11, 21) de la roue à denture intérieure (10) et du couvercle de boîtier (20), dans lequel les évidements (12, 22) forment ensemble une rainure annulaire (30) qui reçoit un cordon de soudage (40).

10. Procédé de fabrication d'un boîtier de boîte de vitesses, en particulier selon la revendication 8, comprenant les étapes suivantes, se succédant dans le temps :
- fourniture d'une roue à denture intérieure (10) avec une denture intérieure au moins par endroits et d'un couvercle de boîtier (20), dans lequel la roue à denture intérieure (10) et le couvercle de boîtier (20) présentent des surfaces de clinchage (11, 21) complémentaires l'une de l'autre ;
- clinchage coaxial de la roue à denture intérieure (10) avec le couvercle de boîtier (20) pour produire un contact de surface entre les surfaces de clinchage (11, 21) coniques, dans lequel une zone de chevauchement (31) est formée ; et
- chauffage de la zone de chevauchement (31), en particulier par soudage par friction par rotation, de sorte que la roue à denture intérieure (10) et le couvercle de boîtier (20) soient reliés de façon matérielle dans la zone de chevauchement (31).

11. Procédé selon la revendication 10,
**caractérisé en ce que**
lors de la production du contact de surface est formée une liaison de compression entre les surfaces de clinchage (11, 21) de la roue à denture intérieure (10) et du couvercle de boîtier (20).

12. Procédé selon l'une des revendications précédentes,
**caractérisé en ce que**
le couvercle de boîtier (20) est formé par une flasque d'un moteur ou par un élément d'adaptateur qui est prévu pour relier le boîtier de boîte de vitesses à un moteur.

13. Procédé selon la revendication 12,
**caractérisé en ce que**
l'élément d'adaptateur est ou peut être relié par soudage à la roue à denture intérieure (10) du côté de la boîte de vitesses et présente un raccord universel pour une liaison avec différents moteurs, en particulier des moteurs électriques, du côté du moteur.
